# EUROPÄISCHE PATENTSCHRIFT

(11) **EP 1 741 876 B1**
(45) Veröffentlichungstag und Bekanntmachung des Hinweises auf die Patenterteilung: **24.09.2008**
(21) Anmeldenummer: 06012929.3
(22) Anmeldetag: 23.06.2006
(51) Int. Cl.: F01D 5/28

(54) **Schaufel einer Turbomaschine mit einer Schaufelspitzenpanzerung**
Turbomachine blade comprising an armoured tip
Aube de turbomachine comprenant une extrémité blindée

(30) Priorität: 29.06.2005 DE 102005030266
(43) Veröffentlichungstag der Anmeldung: 10.01.2007
(73) Patentinhaber: MTU Aero Engines GmbH, 80995 München (DE)
(72) Erfinder: Eichmann, Wolfgang, 82178 Puchheim (DE); Manier, Karl-Heinz, 85298 Scheyern (DE); Uihlein, Thomas, 85221 Dachau (DE); Uecker, Markus, 80796 München (DE); Heutling, Falko, 81377 München (DE)

(56) Entgegenhaltungen:
- EP-A2- 0 919 699
- WO-A-01/32799
- US-A- 5 059 095

## Beschreibung

Die Erfindung betrifft eine Schaufel einer Turbomaschine, insbesondere einer Gasturbine, mit einer Schaufelspitzenpanzerung nach dem Oberbegriff des Anspruchs 1.

Turbomaschinen, wie zum Beispiel Gasturbinen, umfassen in der Regel mehrere Stufen mit rotierenden Laufschaufeln sowie feststehenden Leitschaufeln, wobei die Laufschaufeln zusammen mit einem Rotor rotieren und wobei die Laufschaufeln sowie die Leitschaufeln von einem feststehenden Gehäuse der Gasturbine umschlossen sind. Zur Leistungssteigerung ist es von Bedeutung alle Komponenten und Subsysteme zu optimieren. Hierzu zählen auch die sogenannten Dichtsysteme. Besonders problematisch ist bei Gasturbinenflugtriebwerken die Einhaltung eines minimalen Spalts zwischen den rotierenden Laufschaufeln und dem feststehenden Gehäuse eines Hochdruckverdichters sowie zwischen den feststehenden Leitschaufeln und einer rotierenden Rotorwelle des Hochdruckverdichters. Bei Hochdruckverdichtern treten nämlich die größten Temperaturen sowie Temperaturgradienten auf, was die Spalthaltung erschwert. Dies liegt unter anderem auch darin begründet, dass bei Verdichterlaufschaufeln sowie Verdichterleitschaufeln auf Deckbänder, wie sie bei Turbinen verwendet werden, verzichtet wird.

Wie bereits erwähnt, verfügen die Leitschaufeln und die Laufschaufeln im Verdichter über kein Deckband. Daher sind Enden bzw. Spitzen der rotierenden Laufschaufeln beim sogenannten Anstreifen in das feststehende Gehäuse einem direkten Reibkontakt mit dem Gehäuse ausgesetzt. Die freien Enden bzw. Spitzen der Leitschaufeln sind einem direkten Reibkontakt mit der Rotorwelle ausgesetzt. Ein solches Anstreifen der Schaufelspitzen wird bei Einstellung eines minimalen Radialspalts durch Fertigungstoleranzen hervorgerufen. Da durch den Reibkontakt der Schaufelspitzen an den Schaufelspitzen Material abgetragen wird, kann sich über den gesamten Umfang von Gehäuse und Rotor eine unerwünschte Spaltvergrößerung einstellen.

Um dies zu vermeiden ist es aus dem Stand der Technik, z.B. aus der EP 0 919 699 A, bereits bekannt, den Schaufelspitzen eine Schaufelspitzenpanzerung zuzuordnen, die aus Hartstoffpartikeln bzw. abrasiven Partikeln gebildet sein kann. Eine derartige Schaufelspitzenpanzerung unterliegt während des Betriebs jedoch auch einem Verschleiß und kann beschädigt werden.

Hiervon ausgehend liegt der vorliegenden Erfindung das Problem zu Grunde, eine Schaufel einer Turbomaschine, insbesondere einer Gasturbine, zu schaffen, deren Schaufelspitzenpanzerung verschleißunanfälliger ist.

Dieses Problem wird durch eine Schaufel gemäß Anspruch 1 gelöst. Erfindungsgemäß ist die Schaufelspitzenpanzerung von einer Beschichtung überzogen, die aus einem oder mehreren, in Wiederholung auf die Schaufelspitzenpanzerung aufgebrachten Mehrlagenschichtsystem gebildet ist, wobei jedes der einmal oder in Wiederholung aufgebrachten Mehrlagenschichtsysteme mindestens zwei unterschiedliche Schichten aufweist, nämlich eine der zu beschichtenden Schaufelspitzenpanzerung zugewandte Schicht aus einem Metallwerkstoff und eine Schicht aus einem Keramikwerkstoff.

Vorzugsweise weist jedes der einmal oder in Wiederholung aufgebrachten Mehrlagenschichtsysteme mindestens vier unterschiedliche Schichten auf,
wobei eine erste, der zu beschichtenden Schaufelspitzenpanzerung zugewandte Schicht des oder jedes Mehrlagenschichtsystems aus einem Metallwerkstoff gebildet ist, wobei eine auf die erste Schicht aufgebrachte zweite Schicht des oder jedes Mehrlagenschichtsystems aus einem Metalllegierungswerkstoff gebildet ist, wobei eine auf die zweite Schicht aufgebrachte dritte Schicht des oder jedes Mehrlagenschichtsystems aus einem gradierten Metall-Keramik-Werkstoff gebildet ist, wobei eine auf die dritte Schicht aufgebrachte vierte Schicht des oder jedes Mehrlagenschichtsystems aus einem Keramikwerkstoff gebildet ist, und wobei zumindest alle keramischen Lagen nanostrukturiert sind.

Durch die Beschichtung der Schaufelspitzenpanzerung mit mindestens einem derartigen Mehrlagenschichtsystem kann die Schaufelspitzenpanzerung vor Verschleiß geschützt werden. Eine Gesamtschichtdicke der Schichten des oder jedes Mehrlagenschichtsystems ist kleiner als 100 µm, sodass die Beschichtung der Schaufelspitzenpanzerung sehr dünn ausfällt. Die sich einstellende Oberflächenbeschaffenheit ist sehr glatt, so dass sich keine negativen Einflüsse auf die Aerodynamik einstellen. Die Dichtwirkung und Haltbarkeit von Schaufelspitzenpanzerung kann gegenüber dem Stand der Technik verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Ansicht einer erfindungsgemäßen Schaufel; und
- Fig. 2: einen schematisierten Querschnitt durch die Schaufelspitze der erfindungsgemäßen Schaufel.

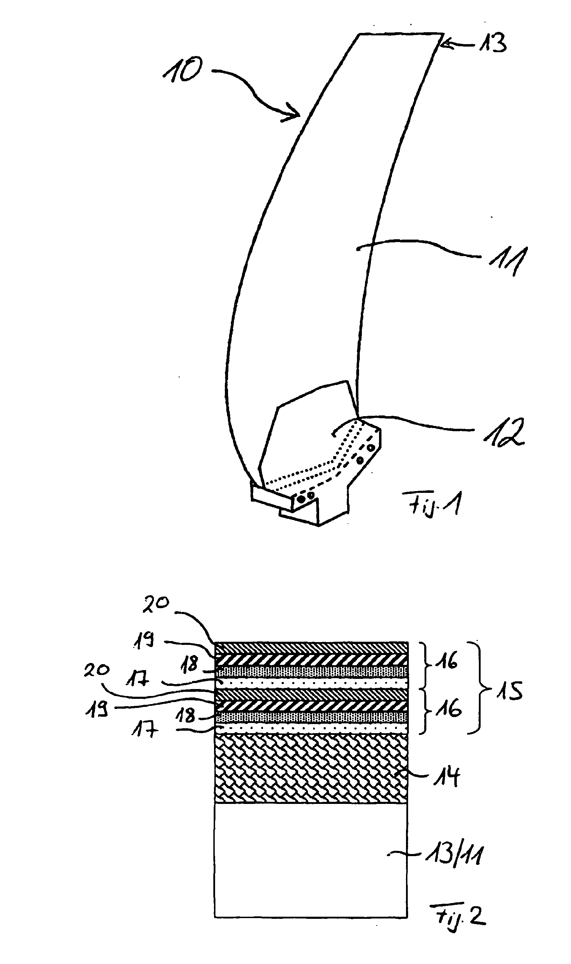

Nachfolgend wird die Erfindung unter Bezugnahme auf Fig. 1 und 2 in größerem Detail beschrieben.

Fig. 1 zeigt eine schematisierte Darstellung einer Laufschaufel 10 eines Gasturbinenflugtriebwerks. Die Laufschaufel 10 umfasst ein Schaufelblatt 11 sowie einen Schaufelfuß 12. Ein radial außen liegendes Ende des Schaufelblatts 11 bildet eine sogenannte Schaufelspitze 13. Zum Verschleißschutz der Schaufelspitze 13 beim sogenannten Anstreifen derselben in ein feststehendes Gehäuse trägt dieselbe eine Schaufelspitzenpanzerung 14, die nach dem Stand der Technik vorzugsweise aus Hartstoffpartikeln bzw. aus abrasiven Partikeln gebildet ist.

Im Sinne der hier vorliegenden Erfindung ist die Schaufelspitzenpanzerung 14 außen von einer Beschichtung 15 überzogen, die aus einem oder mehreren, in Wiederholung auf die Schaufelspitzenpanzerung 14 aufgebrachten Mehrlagenschichtsystem 16 gebildet ist. Im gezeigten Ausführungsbeispiel besteht die Beschichtung 15 der Schaufelspitzenpanzerung 14 aus zwei Mehrlagenschichtsystemen 16. Jedes der beiden Mehrlagenschichtsysteme 16 besteht aus mindestens zwei Schichten. Im gezeigten, bevorzugten Ausführungsbeispiel besteht jedes Mehrlagenschichtsystem 16 aus vier unterschiedlichen Schichten, wobei eine erste, der zu beschichtenden Schaufelspitzenpanzerung 14 zugewandte Schicht 17 jedes Mehrlagenschichtsystems 16 aus Metallwerkstoff gebildet ist. Eine auf die erste Schicht 17 aufgebrachte zweite Schicht 18 jedes Mehrlagenschichtsystems 16 ist aus einem Metalllegierungswerkstoff gebildet. Eine auf die zweite Schicht 18 aufgebrachte dritte Schicht 19 jedes Mehrlagenschichtsystems 16 ist aus einem gradierten Metall-Keramik-Werkstoff und eine auf die dritte Schicht 19 aufgebrachte vierte Schicht 20 jedes Mehrlagenschichtsystems 16 ist aus einem Keramikwerkstoff gebildet. Der gradierte Metall-Keramik-Werkstoff innerhalb der Schicht 19 bildet einen Übergang zwischen der zweiten Schicht 18 und der vierten Schicht 20, nämlich von der Metalllegierung der zweiten Schicht 18 zum Keramikwerkstoff der vierten Schicht 20. Die konkrete Ausführung der einzelnen Schichten 17 bis 20 der Mehrlagenschichtsysteme 15, 16 und 21 ist an die Werkstoffzusammensetzung des zu beschichtenden Bauteils 10 angepasst.

Bei einer Laufschaufel 10, die aus einem Nickelbasiswerkstoff gebildet ist, ist die erste Schicht 17 vorzugsweise als Nickelschicht (Ni-Schicht) ausgebildet. Auf eine solche Ni-Schicht 17 ist dann eine aus einem Nickel-Chrom-Werkstoff gebildete zweite Schicht 18 (NiCr-Schicht) aufgebracht. An die zweite Schicht 18 aus dem Nickel-Chrom-Werkstoff schließt sich dann als dritte Schicht 19 eine gradierte Metall-Keramikschicht an, die vorzugsweise aus einem CrN1-x Werkstoff gebildet ist (CrN1-x-Schicht). Die vierte Schicht 20 wird von einem Keramikwerkstoff, nämlich Chromnitrid, gebildet (CrN-Schicht). Zumindest sind alle keramischen Lagen, also zumindest die dritte Schicht 19 und die vierte Schicht 20, nanostrukturiert. Es können auch alle Lagen 17 bis 20 nanostrukturiert sein.

Bei einer Laufschaufel 10, die aus einem Titanbasiswerkstoff gebildet ist, ist die erste Schicht 17 vorzugsweise aus Titan, Palladium oder Platin gebildet. Auf eine derartige, erste Schicht 17 ist dann eine zweite Schicht 18 aufgebracht, die von einem TiCrAl-Werkstoff oder einem CuAlCr-Werkstoff gebildet wird. Als dritte Schicht 19 schließt sich wiederum eine Gradierungsschicht an, die entweder aus einem CrAlN1-x Werkstoff oder einem TiAlN1-x Werkstoff gebildet ist. In dem Fall, in dem die Schicht 19 von einem CrAlN1-x Werkstoff gebildet ist, schließt sich als vierte Schicht 20 als keramische Schicht eine CrAlN-Schicht an. In dem Fall, in dem die Schicht 19 von dem TiAlN1-x Werkstoff gebildet ist, ist die vierte Schicht 20 vorzugsweise aus Titanaluminiumnitrid (TiAlN) gebildet. Anstelle des Titanaluminiumnitrid-Werkstoffs kann für die vierte Schicht 20 in diesem Fall jedoch auch ein TiAlSiN-Werkstoff oder AlTiN-Werkstoff oder TiN/AlN-Werkstoff als keramischer Werkstoff verwendet werden.

Die Beschichtung 15 wird auf die Schaufelspitzenpanzerung 14 mittels eines PVD-Beschichtungsprozesses aufgetragen. Die Schichtdicke eines Mehrlagenschichtsystems 16 beträgt vorzugsweise weniger als 100 µm. Es ist auch möglich, die Beschichtung 15 im Bereich des gesamtem Schaufelblatts 11 auf die Laufschaufel 10 aufzutragen.

## Patentansprüche

1. Schaufel einer Turbomaschine, insbesondere einer Gasturbine, mit einer auf eine Schaufelspitze (13) eines Schaufelblatts (11) aufgebrachten Schaufelspitzenpanzerung (14),
**dadurch gekennzeichnet,**
**dass** die Schaufelspitzenpanzerung (14) von einer Beschichtung (15) überzogen ist, die aus einem oder mehreren, in Wiederholung auf die Schaufelspitzenpanzerung (14) aufgebrachten Mehrlagenschichtsystem (16) gebildet ist, wobei jedes der einmal oder in Wiederholung aufgebrachten Mehrlagenschichtsysteme (16) mindestens zwei unterschiedliche Schichten aufweist, nämlich eine der zu beschichtenden Schaufelspitzenpanzerung zugewandte Schicht (17) aus einem Metallwerkstoff und eine Schicht (20) aus einem Keramikwerkstoff.

2. Schaufel nach Anspruch 1,
**dadurch gekennzeichnet,**
**dass** jedes der einmal oder in Wiederholung aufgebrachten Mehrlagenschichtsysteme (16) mindestens vier unterschiedliche Schichten aufweist, wobei eine erste, der zu beschichtenden Schaufelspitzenpanzerung zugewandte Schicht (17) des oder jedes Mehrlagenschichtsystems aus einem Metallwerkstoff gebildet ist, wobei eine auf die erste Schicht (17) aufgebrachte zweite Schicht (18) des oder jedes Mehrlagenschichtsystems aus einem Metalllegierungswerkstoff gebildet ist, wobei eine auf die zweite Schicht (18) aufgebrachte dritte Schicht (19) des oder jedes Mehrlagenschichtsystems aus einem gradierten Metall-Keramik-Werkstoff gebildet ist, und wobei eine auf die dritte Schicht (19) aufgebrachte vierte Schicht (20) des oder jedes Mehrlagenschichtsystems aus einem Keramikwerkstoff gebildet ist.

3. Schaufel nach Anspruch 1 oder 2,
**dadurch gekennzeichnet,**
**dass** das oder jedes Mehrlagenschichtsystem (16) neben der Schaufelspitzenpanzerung (14) und damit der Schaufelspitze (13) auch die restlichen Abschnitte des Schaufelblatts (11) überzieht.

4. Schaufel nach einem oder mehreren der Ansprüche 1 bis 3,
**dadurch gekennzeichnet,**
**dass** jedes der in Wiederholung aufgebrachten Mehrlagenschichtsysteme (16) einen gleichen Schichtaufbau aufweist.

5. Schaufel nach einem oder mehreren der Ansprüche 1 bis 4,
**dadurch gekennzeichnet,**
**dass** die erste Schicht (17) bei einer Schaufel auf einem Nickelbasiswerkstoff aus einem Nickelwerkstoff gebildet ist.

6. Schaufel nach Anspruch 5,
**dadurch gekennzeichnet,**
**dass** die zweite Schicht (18) aus einem Nickellegierungswerkstoff, vorzugsweise aus einem NiCr-Werkstoff, gebildet ist.

7. Schaufel nach Anspruch 5 oder 6,
**dadurch gekennzeichnet,**
**dass** die dritte Schicht (19) aus einem CrN1-x Werkstoff gebildet ist.

8. Schaufel nach einem oder mehreren der Ansprüche 5 bis 7,
**dadurch gekennzeichnet,**
**dass** die vierte Schicht (20) aus einem CrN-Werkstoff gebildet ist.

9. Schaufel nach einem oder mehreren der Ansprüche 1 bis 4,
**dadurch gekennzeichnet,**
**dass** die erste Schicht (17) bei einer Schaufel aus einem Titanbasiswerkstoff aus einem Titanwerkstoff oder Platinwerkstoff oder Palladiumwerkstoff gebildet ist.

10. Schaufel nach Anspruch 9,
**dadurch gekennzeichnet,**
**dass** die zweite Schicht (18) aus einem Titanlegierungswerkstoff oder einem Aluminiumlegierungswerkstoff, vorzugsweise aus einem TiCrAl-Werkstoff oder einem CuAlCr-Werkstoff, gebildet ist.

11. Schaufel nach Anspruch 10,
**dadurch gekennzeichnet,**
**dass** die dritte Schicht (19) aus einem CrAlN1-x Werkstoff oder aus einem TiAlN1-x Werkstoff gebildet ist.

12. Schaufel nach einem oder mehreren der Ansprüche 9 bis 11,
**dadurch gekennzeichnet,**
**dass** zumindest die vierte Schicht (20) aus einem CrAlN-Werkstoff oder aus einem TiAlN-Werkstoff oder aus einem TiAlSiN-Werkstoff oder aus einem TiN/AlN-Werkstoff gebildet ist.

13. Schaufel nach einem oder mehreren der Ansprüche 1 bis 12,
**dadurch gekennzeichnet,**
**dass** zumindest die keramischen Schichten (19, 20) nanostrukturiert sind.

14. Schaufel nach einem oder mehreren der Ansprüche 1 bis 13,
**dadurch gekennzeichnet,**
**dass** alle Schichten (17, 18, 19, 20) nanostrukturiert sind.

15. Schaufel nach einem oder mehreren der Ansprüche 1 bis 14,
**dadurch gekennzeichnet,**
**dass** die Gesamtschichtdicke der Schichten des oder jedes Mehrlagenschichtsystems (16) kleiner als 100 µm ist.

## Claims

1. A turbomachine blade, in particular of a gas turbine, having an armoured tip (14) fitted on a tip (13) of a blade (11),
**characterised in that**
the armoured tip (14) is covered by a coating (15) which takes the form of one or more multiple layer coating systems (16) applied singly or repeatedly to the armoured tip (14), each of the single or repeatedly applied multiple layer coating systems (16) having at least two different layers, namely a layer (17) made of a metal material facing the armoured tip to be coated and a layer (20) made of a ceramic material.

2. A blade in accordance with claim 1,
**characterised in that**
each of the singly or repeatedly applied multiple layer coating systems (16) has at least four different layers, a first layer (17) of the or each multiple layer coating system facing the armoured tip to be coated being made of a metal material, a second layer (18) of the or each multiple layer coating system applied to the first layer (17) being made of a metal alloy material, a third layer (19) of the or each multiple layer coating system applied to the second layer (18) being made of a graded metal/ceramic material and a fourth layer (20) of the or each multiple layer coating system applied to the third layer (19) being made of a ceramic material.

3. A blade in accordance with claim 1 or 2,
**characterised in that**
in addition to the armoured tip (14) and thus the blade tip (13), the or each multiple layer coating system (16) also covers the remaining sections of the blade (11).

4. A blade in accordance with one or more of claims 1 to 3,
**characterised in that**
each of the repeatedly applied multiple layer coating systems (16) has the same layer structure.

5. A blade in accordance with one or more of claims 1 to 4,
**characterised in that**
the first layer (17) of a blade made of a nickel-based material is made of a nickel material.

6. A blade in accordance with claim 5,
**characterised in that**
the second layer (18) is made of a nickel alloy material, preferably a NiCr material.

7. A blade in accordance with claim 5 or 6,
**characterised in that**
the third layer (19) is made of a CrN1-x material.

8. A blade in accordance with one or more of claims 5 to 7,
**characterised in that**
the fourth layer (20) is made of a CrN material.

9. A blade in accordance with one or more of claims 1 to 4,
**characterised in that**
the first layer (17) in a blade made of a titanium-based material is made of a titanium-based material or a platinum-based material or palladium-based material.

10. A blade in accordance with claim 9,
**characterised in that**
the second layer (18) is made of a titanium alloy material or an aluminium alloy material, preferably a TiCrAl material or a CuAlCr material.

11. A blade in accordance with claim 10,
**characterised in that**
the third layer (19) is made of a CrAlN1-x material or a TiAlN1-x material.

12. A blade in accordance with one or more of claims 9 to 11,
**characterised in that**
at least the fourth layer (20) is made of a CrAlN material or a TiAIN material or a TiAlSiN material or a TiN/AlN material.

13. A blade in accordance with one or more of claims 1 to 12,
**characterised in that**
at least the ceramic layers (19, 20) are nanostructured.

14. A blade in accordance with one or more of claims 1 to 13,
**characterised in that**
all the layers (17, 18, 19, 20) are nanostructured.

15. A blade in accordance with one or more of claims 1 to 14,
**characterised in that**
the total layer thickness of the layers of the or each multiple layer coating system (16) is less than 100 µm.

## Revendications

1. Aube d'une turbomachine, en particulier d'une turbine à gaz, avec un blindage de pointe d'aube (14) monté sur une pointe d'aube (13) d'un aubage (11), **caractérisé en ce que** le blindage de pointe d'aube (14) est enduit d'un revêtement (15) qui est constitué par un ou plusieurs systèmes multicouches (16) appliqués par répétition sur le blindage de pointe d'aube (14), dans lequel chacun des systèmes multicouches (16) appliqués une fois ou par répétition comporte au moins deux couches différentes, à savoir une couche (17) constituée d'un matériau métallique dirigé vers le blindage de pointe d'aube destiné à être enduit et une couche (20) faite en un matériau céramique.

2. Aube selon la revendication 1, **caractérisé en ce que** chacun des systèmes multicouches (16) appliqués une fois ou par répétition comporte au moins quatre couches différentes, une première couche (17) dirigée vers le blindage de pointe d'aube destiné à être enduit du ou de chaque système multicouches étant constituée d'un matériau métallique, une deuxième couche (18) appliquée sur la première couche (17) du ou de chaque système multicouches étant constituée d'un matériau d'alliage métallique, une troisième couche (19) appliquée sur la deuxième couche (18) du ou de chaque système multicouches étant constituée d'un matériau métallique-céramique gradué et une quatrième couche (20) appliquée sur la troisième couche (19) du ou de chaque système multicouches étant constituée d'un matériau céramique.

3. Aube selon la revendication 1 ou 2, **caractérisé en ce que** le ou chaque système multicouches (16) recouvre, en plus du blindage de pointe d'aube (14) et, donc, de la pointe d'aube (13), également les tronçons restants de l'aubage (11).

4. Aube selon une ou plusieurs des revendications 1 à 3, **caractérisé en ce que** chacun des systèmes multicouches (16) appliqués par répétition présente une structure par couches identique.

5. Aube selon une ou plusieurs des revendications 1 à 4, **caractérisé en ce que** la première couche (17), dans une aube faite en un matériau à base de nickel, est constituée d'un matériau au nickel.

6. Aube selon la revendication 5, **caractérisé en ce que** la deuxième couche (18) est constituée d'un matériau d'alliage de nickel, de préférence un matériau au NiCr.

7. Aube selon la revendication 5 ou 6, **caractérisé en ce que** la troisième couche (19) est constituée d'un matériau au CrN1-x.

8. Aube selon une ou plusieurs des revendications 5 à 7, **caractérisé en ce que** la quatrième couche (20) est constituée d'un matériau au CrN.

9. Aube selon une ou plusieurs des revendications 1 à 4, **caractérisé en ce que** la première couche (17), dans une aube faite en un matériau à base de titane, est constituée d'un matériau au titane ou d'un matériau au platine ou d'un matériau au palladium.

10. Aube selon la revendication 9, **caractérisé en ce que** la deuxième couche (18) est constituée d'un matériau d'alliage de titane ou d'un matériau d'alliage d'aluminium, de préférence d'un matériau au TiCrAl ou d'un matériau au CuAlCr.

11. Aube selon la revendication 10, **caractérisé en ce que** la troisième couche (19) est constituée d'un matériau au CrAlN1-x ou d'un matériau au TiAlN1-x.

12. Aube selon une ou plusieurs des revendications 9 à 11, **caractérisé en ce qu'**au moins la quatrième couche (20) est constituée d'un matériau au CrAlN ou d'un matériau au TiAlN ou d'un matériau au TiAlSiN ou d'un matériau au TiN/AlN.

13. Aube selon une ou plusieurs des revendications 1 à 12, **caractérisé en ce qu'**au moins les couches en céramique (19, 20) sont nano-structurées.

14. Aube selon une ou plusieurs des revendications 1 à 13, **caractérisé en ce que** toutes les couches (17, 18, 19, 20) sont nano-structurées.

15. Aube selon une ou plusieurs des revendications 1 à 14, **caractérisé en ce que** l'épaisseur totale des couches du ou de chaque système multicouches (16) est inférieure à 100 µm.
